# EUROPÄISCHE PATENTSCHRIFT

(11) **EP 2 436 252 B1**
(45) Veröffentlichungstag und Bekanntmachung des Hinweises auf die Patenterteilung: **07.05.2014**
(21) Anmeldenummer: 11001678.9
(22) Anmeldetag: 01.03.2011
(51) Int. Cl.: A01B 79/00, A01D 78/10

(54) **Verfahren zum Betreiben einer Rechkreiselaushubsteuerung**
Method for operating a rotary rake lift control system
Procédé de commande à soulever des râteaux rotatifs

(30) Priorität: 29.09.2010 DE 102010046938
(43) Veröffentlichungstag der Anmeldung: 04.04.2012
(73) Patentinhaber: CLAAS Saulgau GmbH, 88348 Bad Saulgau (DE)
(72) Erfinder: Loebe, Stefan, 88348 Bad Saulgau (DE)

(56) Entgegenhaltungen:
- EP-A1- 1 488 679
- EP-A2- 1 013 159
- EP-A2- 1 364 573
- WO-A1-2011/115477
- US-A1- 2010 185 364

## Beschreibung

Die Erfindung betrifft ein Verfahren nach dem Oberbegriff des Anspruches 1

### Stand der Technik

Bekannt sind Vierkreisel- und Sechskreiselschwader mit Steuersystemen, die es ermöglichen, Schwadkreisel einzeln oder in ihrer Gesamtheit gezielt anzusteuern, d.h. diese unabhängig vom benachbarten oder vor- oder nachgeordneten Schwadkreisel im Laufe des Schwadprozesses von einer bodennahen in eine bodenferne Stellung zu bringen und dabei ihre Antriebe ebenfalls gezielt ab- oder einzuschalten. Beispielsweise kommt dabei als Steuerungssystem ein LBS-System (Landwirtschaftliches Bussystem) zum Einsatz, welches bedeutet, dass geräteseitig ein sogenannter Job-Rechner vorhanden ist, an dem entsprechende Ein- und Ausgänge für Sensoren und Aktoren anliegen und der entsprechend den in seinem ROM und RAM-Speicher hinterlegten Daten und Steuerbefehlen diese ausgeführt werden können. Dabei sind die Sensoren und Aktoren über ein BUS-System mit dem Jobrechner vernetzt. In der Fahrerkabine befindet sich ein Terminal, welches ebenfalls über das BUS-System mit dem Jobrechner vernetzt ist. Der Fahrer kann somit den Arbeitsprozess auch am Terminal visuell verfolgen und von diesem manuell Steuerbefehle auslösen oder auch Bewegungsabläufe stoppen. In der CLAAS-Schrift EP 1 433 372 A1 ist ein derartiges Steuersystem am Beispiel eines Sechskreiselschwaders ausführlich beschrieben und erläutert. An den Fahrer und damit an den Bediener derartiger Mehrkreiselschwader mit Arbeitsbreiten bis zu 20 m werden dabei große Anforderungen hinsichtlich seiner Konzentration auf den Ablauf des Arbeitsprozesses abverlangt, da er je nach Anzahl der Rechkreisel z. B. vier oder sechs Rechkreisel mehr oder weniger gleichzeitig im Auge haben muss, wobei er sich diesen auch noch teils rückwärtsgewandt zuwenden muss, welches ihn leicht in den Bereich der mentalen Überforderung hineinführen kann.

### Aufgabenstellung

Hier setzt die Aufgabe der Erfindung an, mit dem Ziel, den Fahrer des Gespanns, bestehend aus Traktor und Mehrkreiselschwader, im Laufe des Arbeitsprozesses mental zu entlasten, welches auch einen Beitrag zur Arbeitssicherheit für weitere Personen, den sogenannten Bystandern, die sich in seinem Umfeld aufhalten können, leisten soll.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung betrifft ein Verfahren zum Betreiben einer Rechkreiselanshubsteuerung zur Verbesserung des Schwadprozesses an Mehrkreiselschwadern 1, nachfolgend als Schwader bezeichnet, insbesondere bei großen Arbeitsbreiten. Genutzt wird das Verfahren in Verbindung mit der bekannten GPS Technik zur Lenkung und Steuerung des Prozesses der Schwadablage. Dieses geschieht durch die Vernetzung der GPS Koordinaten mit der Steuerung des Aushubes bei jedem einzelnen Schwadkreisel 2 eines Schwaders 1 von einer bodennahen in eine bodenferne Stellung und umgekehrt.

Um die genaue Position und die Ausrichtung des Schwaders 1 ermitteln zu können, verfügt der Schwader 1 über zwei GPS-Empfänger 3,4, mit je einer Empfangsantenne 6,7. Die Position der ersten GPS Empfangsantenne 6 liegt erfindungsgemäß auf der führenden Achse 8 des Fahrgestells 9 des Gezogenen Schwaders 1 und die Position der zweiten GPS Empfangsantenne 7 liegt erfindungsgemäß auf der Deichsel 10 des Fahrgestells 9 in Fahrtrichtung F vor der Tangente 5 der beiden Rechkreisel der vorderen Staffelreihe 24 in der voll ausgefahrenen Arbeitsstellung 32 des Schwaders 1. Dadurch kann sowohl der genaue Ort, als auch die Ausrichtung des Schwaders in Bezug auf die derzeitige oder geplante Fahrtrichtung F ermittelt werden. Diese GPS Koordinaten können miteinander korreliert werden, so dass das Steuerungssystem diese für den Kreiselaushub nutzen kann und daraus Rückschlüsse ziehen kann, wann und wo welche Schwadkreisel des Schwaders 1 beispielsweise beim Überfahren eines bereits abgelegten Schwades 11 angehoben oder wieder abgesenkt werden müssen.

Dabei liegt der erfinderische Vorteil insbesondere darin, dass die mechanischen Arbeitswerkzeuge, nämlich die Schwadkreisel, gezielt aus einer Arbeitsstellung in eine Transportstellung, oder wenn nicht in diese Stellung, so doch zumindest in eine ausgehobene bodenferne Stellung, gebracht werden sollen, wenn dieses im Laufe des Rechprozesses von Vorteil ist. Von Vorteil ist dieses immer dann, wenn es zweckdienlich ist, einen oder mehrere Rechkreisel des Schwaders aus dem eigentlichen Rechprozess herauszunehmen, während andere mit dem Rechprozess im Eingriff stehen bleiben. Dieses ist beispielsweise dann gegeben, wenn bereits existierende, d.h. im Laufe des Bearbeitungsprozesses geformte und abgelegte Schwade durch einen oder mehrere Rechkreisel wieder erfasst und dadurch wieder zerstört würden, beispielsweise im Vorgewende oder in der letzen Phase des Arbeitsprozesses, wenn in der letzten Fahrt keine volle Arbeitsbreite mehr zur Verfügung steht. Dabei wird die Hubbewegung der einzelnen Schwadkreisel 2 eines Schwaders in Abhängigkeit der äußeren Feldkontur 12 automatisch ausgeführt.

Dieses dient insbesondere auch der mentalen Arbeitsentlastung des Schlepperfahrers. Dabei wird vorteilhafter weise das bereits vorhandene mechatronische System des einzelnen Kreiselaushubes um ein automatisch arbeitendes GPS-gesteuertes elektronisches System gemäß der Erfindung ergänzt. Ein weiteres wichtiges Merkmal ist die verbesserte Arbeitsqualität des Schwader - Schlepper - Gespanns, da eine saubere geordnete Schwadablage für die nachfolgende Häcksel- oder Ladewagentechnik dadurch bereitgestellt wird. Des Weiteren sind die Vorteile dieses GPS-gesteuerten elektronischen Systems insbesondere auch in kleineren und nicht rechtwinkligen Feldstrukturen hilfreich und vorteilhaft einzusetzen.

Die Erfindung wird an einem nachfolgenden Ausführungsbeispiel näher dargelegt und erläutert. Es ist unterstellt, dass der Schwader über ein dem Stand der Technik bekanntes System zur Steuerung des einzelnen Aushubes der Kreisel verfügt. Dieser Stand der Technik ist beispielsweise in der CLAAS-Schrift EP 1 433 372 A1 ausführlich dargestellt und beschrieben, so dass eine Widerholung an dieser Stelle nicht erforderlich ist.

### Ausführungsbeispiel

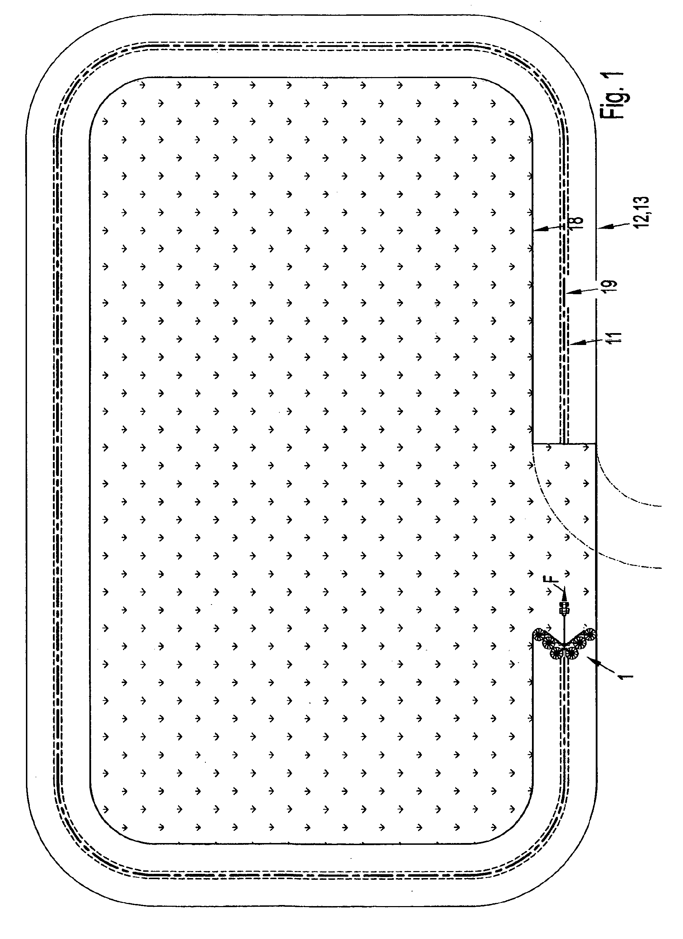

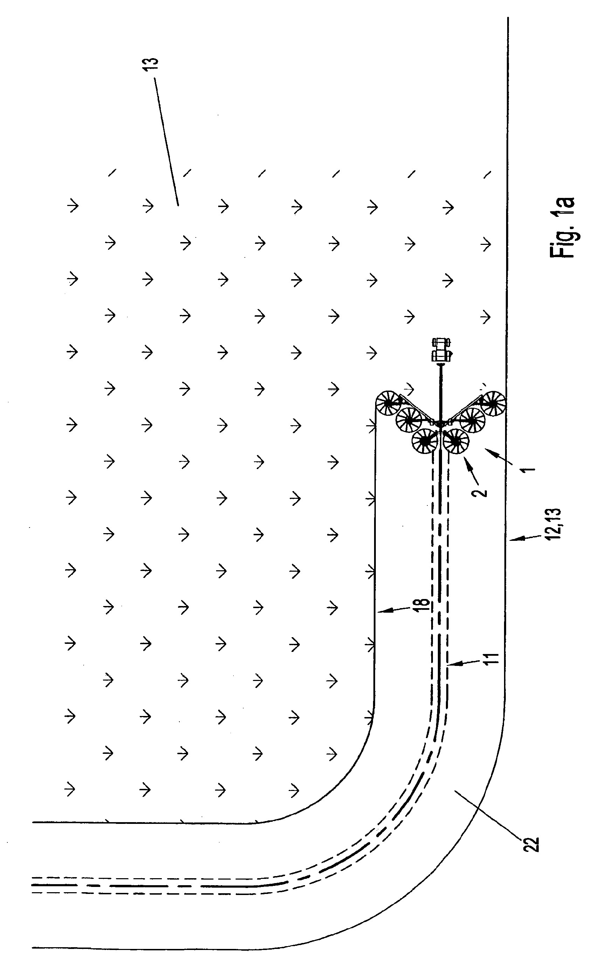

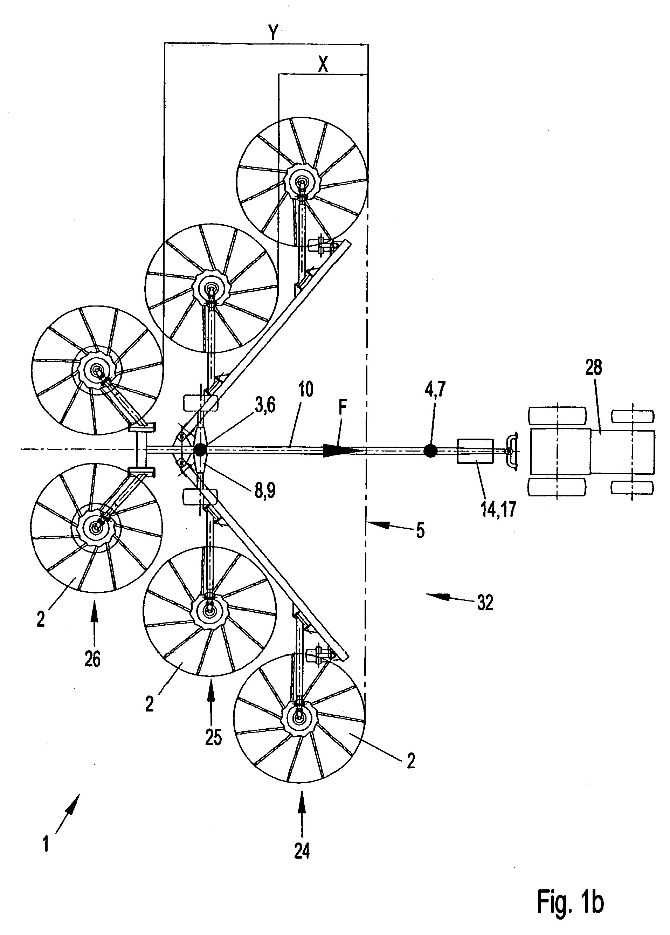

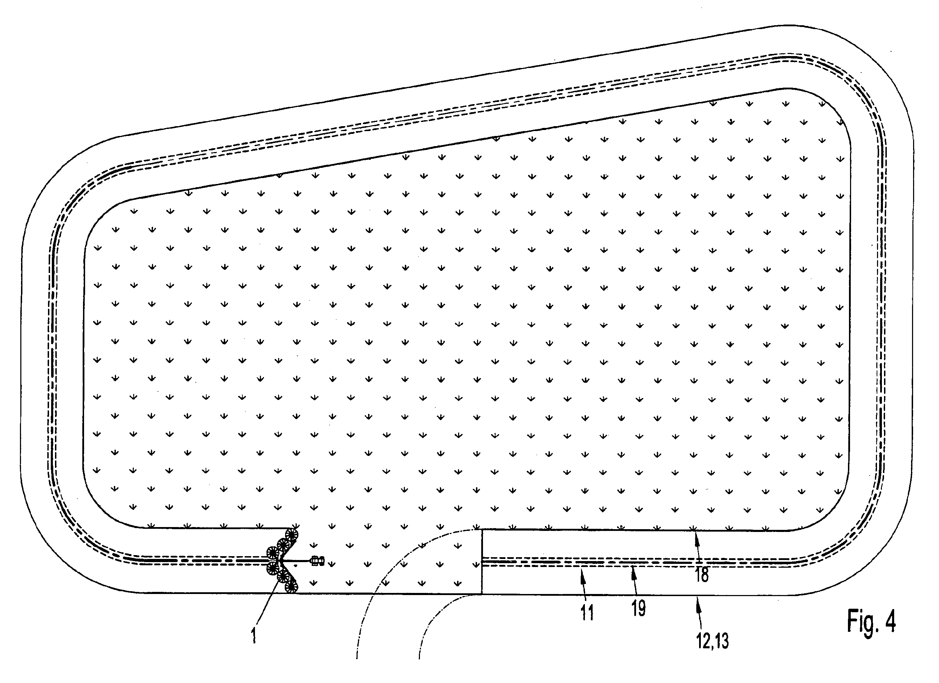

Die nachfolgenden Figuren Fig.1 bis Fig.7 stellen eine Bearbeitungsfläche 13 für einen Mehrkreiselschwader 1 in unterschiedlichen Arbeitssituationen dar. Fig.1a zeigt einen vergrößerten Ausschnitt aus Fig.1.
Fig.1 zeigt einen Mehrkreiselschwader 1, ausgeführt als Sechskreiselschwader während einer Umrundungsfahrt des Feldes und Fig.1 a zeigt einen Ausschnitt aus Fig.1 in vergrößerter Darstellung.
Fig.1b zeigt einen Mehrkreiselschwader 1, ausgeführt als Sechskreiselschwader in vergrößerter Darstellung in Arbeitsstellung mit den ausgeklappten Schwadkreiseln 2 in Arbeitsposition, d.h. die Schwadkreisel befinden sich in bodennaher Arbeitsstellung.

Fig.1 zeigt eine Situation, in der der Schwader 1 eine Arbeitsfahrt als erste Umrundungsfahrt 15 um die Feldkontur 16 zurücklegt. Diese befindet sich aber innerhalb der äußeren Feldkontur 16 und damit innerhalb der zu bearbeitenden Fläche 13. In dieser ersten Runde 15 werden erfindungsgemäß GPS Koordinaten aufgezeichnet und damit die Feldkontur 16 bestimmt und aufgezeichnet und dabei in dem Speicher des µ-Prozessors 14 eines Jobrechners 17 eines BUS-Systems abgespeichert. Es kann sich dabei beispielsweise um einen LBS (Landwirtschaftliches BUS-System) oder den daraus weiterentwickelten ISO-BUS handeln. Der erste GPS Empfänger 3 mit seiner Empfangsantenne 6 befindet sich auf der führenden Achse 8 des gezogenen Schwaders, um eine genaue Kontur des abgelegten Schwades 11 und der Kontur der noch nicht bearbeiteten Fläche 18 zu erhalten. Die Schwadkontur 20 des abgelegten Schwades 11 entspricht der Mittellinie 19 der Spur der führenden Achse 8 des Fahrgestells 9. Die Schwadkontur 20, längs der Mittellinie 19, wird während der Fahrt in Fahrtrichtung F des Schwaders 1 durch die Positionierung des ersten GPS-Empfängers 3 auf der führenden Achse des Gezogenen Schwaders konturengenau aufgezeichnet und auf einem Datenträger abgespeichert.

Die Kontur der noch zu bearbeitenden Fläche 18 wird dabei erfindungsgemäß errechnet, indem die halbe Arbeitsbreite von der Mittellinie der Fahrspur der ersten Umrundung abgezogen wird. Beide Konturen, die Fahrspur gekennzeichnet durch die Mittellinie 19, und die der noch zu bearbeitenden Fläche 18, werden in dem Arbeitspeicher und - falls vorhanden - zusätzlich in einen externen Datenspeicher bzw. einen Datenträger abgelegt.

Falls die Daten der Kontur der unbearbeitenden Fläche 18 und die der Schwadkontur 19 in einen externen Datenspeicher abgelegt und gespeichert werden, können diese Konturen und insbesondere die der Fahrspuren 19, welche beim letztmaligen Schwadvorgang der Saison oder des Vorjahres genutzt worden sind, wiederverwendet werden. Dazu würden dann zu Beginn der Bearbeitung des entsprechenden Feldes die Daten in den Arbeitsspeicher geladen.

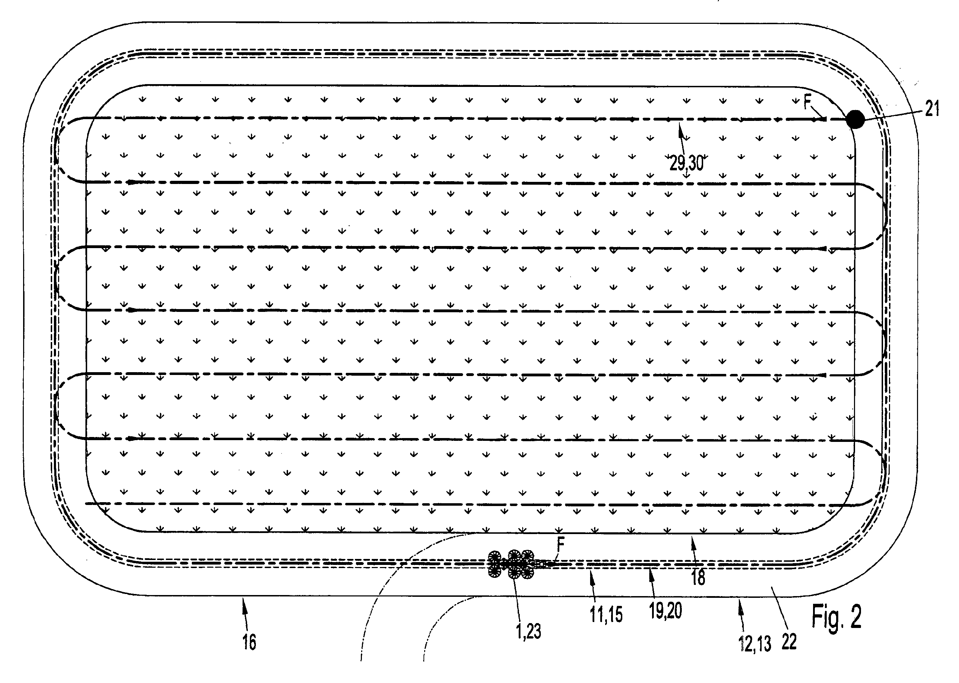

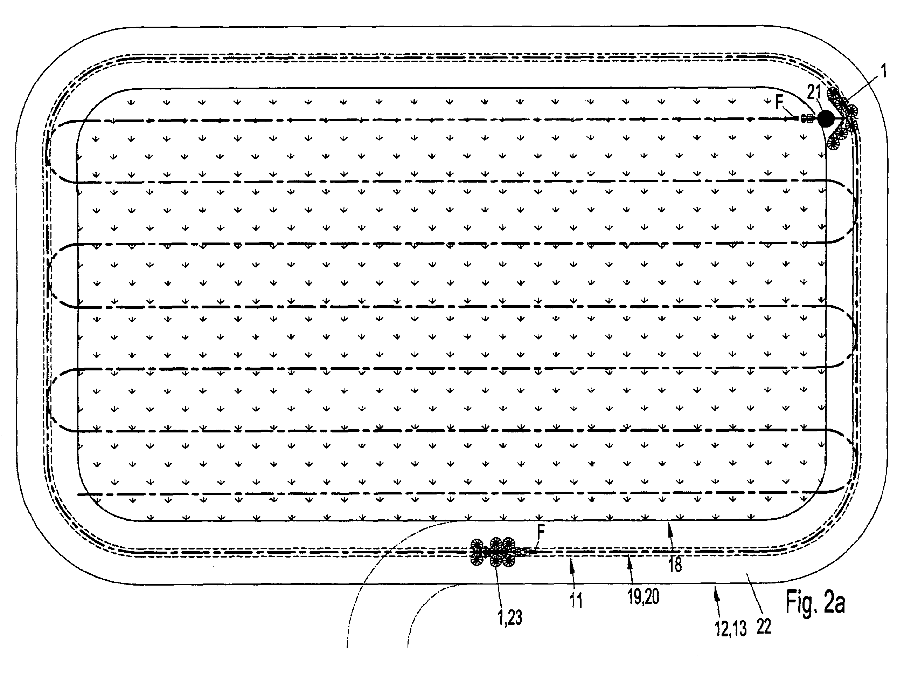

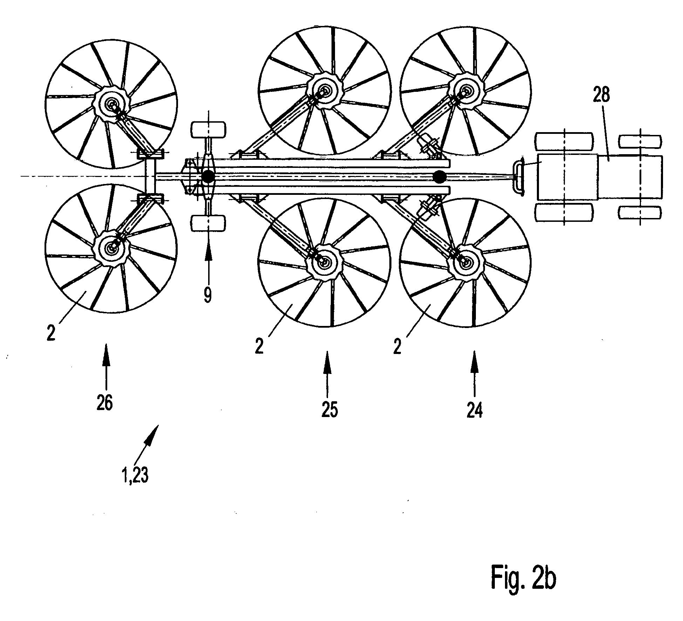

Fig. 2 und Fig.2a zeigen eine Situation nach dem der Schwader die erste Umrundung 15 zurück gelegt hat. Fig.2b zeigt den Mehrkreiselschwader 1 gemäß Fig.1b in vergrößerter Darstellung analog Fig.2 in einer Zwischenstellung zwischen Arbeits- und Transportstellung mit an das Fahrgestell angelegten Schwadkreiseln 2. Es handelt sich bei dieser Zwischenstellung um angehobene Schwadkreisel 2 in einer bodenfernen Zwischenstellung zum Überfahren der abgelegten Schwade 11, in der diese beim Überfahren von den Rechkreiseln nicht auseinander gerissen werden.

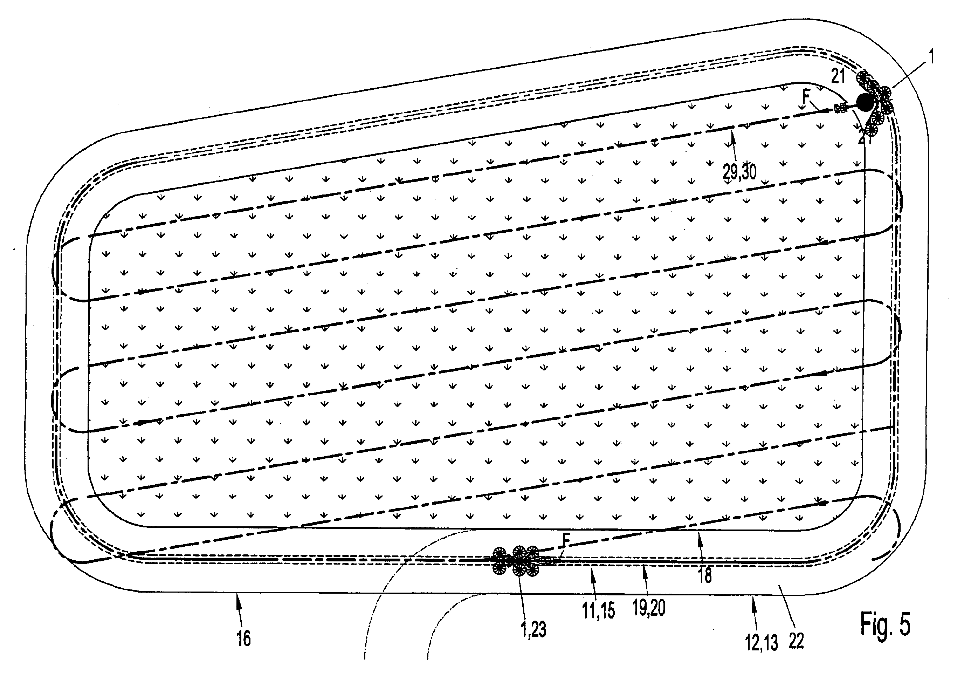

In einer weiteren Ausgestaltung der Erfindung ist es auch möglich, dass der Fahrer sich die Lage des ersten geeigneten Einstichorts 21, bzw. sich mehrere alternative Routenpläne 30 errechnen und als Vorschläge unterbreiten lässt. Fig. 2 und Fig. 5 zeigen Ausführungsbeispiele für derartige Routenpläne 30. Die Software des Steuerungssystems beinhaltet einen Routenplaner, mit dem der Fahrer sich einen oder mehrere Vorschläge unterbreiten lässt, wie er im nächsten Schritt die noch zu bearbeitende Fläche 18 sinnvoller weise abfährt und die geplanten Schwade ablegt. Fig. 2 zeigt ein Ausführungsbeispiel für die mögliche Spur 29 eines Routenvorschlags des Routenplaners für die verbliebene, noch nicht bearbeitete Fläche nach der ersten Umrundung, mit der sie eingrenzenden Kontur 18 und mit einem Einstichort 21. Dem Einstichort 21 werden ebenfalls GPS-Koordinaten zugeordnet, so dass der Fahrer diesen genau anfahren kann. Zuvor gehen die Schwadkreisel 2 zunächst in die Transportlage oder eine Transportzwischenlage 23, wie beispielsweise in Fig.2b vergrößert dargestellt über, und in dieser Transportzwischenlage 23 fährt der Fahrer über den ersten bereits abgelegten Umrundungsschwad hinweg, ohne diesen zu beschädigen und um so an den Einstichort 21 zu gelangen.

Fig. 2a zeigt den Schwader an diesem Einstichort 21 in Startposition. Die Ortskoordinaten des geeigneten Einstichorts 21 sind dem Steuerungssystem online durch den GPS-Empfänger bekannt, und der Fahrer gibt durch einen manuell ausgelösten Steuerbefehl dem Steuersystem die Mitteilung, dass nunmehr die neue Spur nach dem Routenplan 30 beginnen kann, so dass die Arbeitsfahrt zum Schwaden fortgesetzt werden kann. Dabei muss ab diesem neuen Einstichort 21 der Schwader 1 seine Positionierung in der ersten zuvor bearbeiteten Fläche 22 zwischen dem bereits abgelegten Schwad 11 der ersten Umrundung 15 und der noch zu schwadenden Kontur 18 vornehmen.

Da diese neue Einsatzposition es möglicherweise verlangt, dass der Schwader 1 etwa rechtwinklig zu dem bereits erzeugten Schwad 11 aus der ersten Umrundung 15 in die Kontur der noch zu bearbeitenden Fläche 18 einsticht, ist es erforderlich, dass der Fahrer den Schwader 1 in eine Ausgangsposition bringt, in der zumindest die hinteren Schwadkreisel sich oberhalb des zuletzt abgelegten Umrundungsschwads 11 befinden. Deshalb muss, um das bereits abgelegte Schwad 11 nicht zu zerstören, zuerst die vordere Staffelreihe 25 des Schwaders 1 und nach einer ersten zurückgelegten Strecke X die mittlere Staffelreihe 25 und ggf. nach einer Strecke Y die hintere Staffelreihe 26 abgesenkt und in die bodennahe Arbeitsstellung gebracht werden. Dabei nutzt das Steuerungssystem zum Absenken der Schwadkreisel die gespeicherten Daten der Kontur der ersten Umrundung 15 und die Daten-Kontur der noch nicht bearbeitenden Fläche 18. Das Ziel in dieser Phase des Arbeitsprozesses ist es also, zum Einen das bereits erzeugte Schwad der ersten Umrundung 15 nicht wieder auseinander zu ziehen und dieses an dieser Stelle gewissermaßen zu zerstören, und zum Anderen bei dem Einstich in die Kontur der noch nicht bearbeiteten Fläche 18 kein Futter liegen zu lassen, weil die Schwadkreisel 2 zu spät abgesenkt wurden.

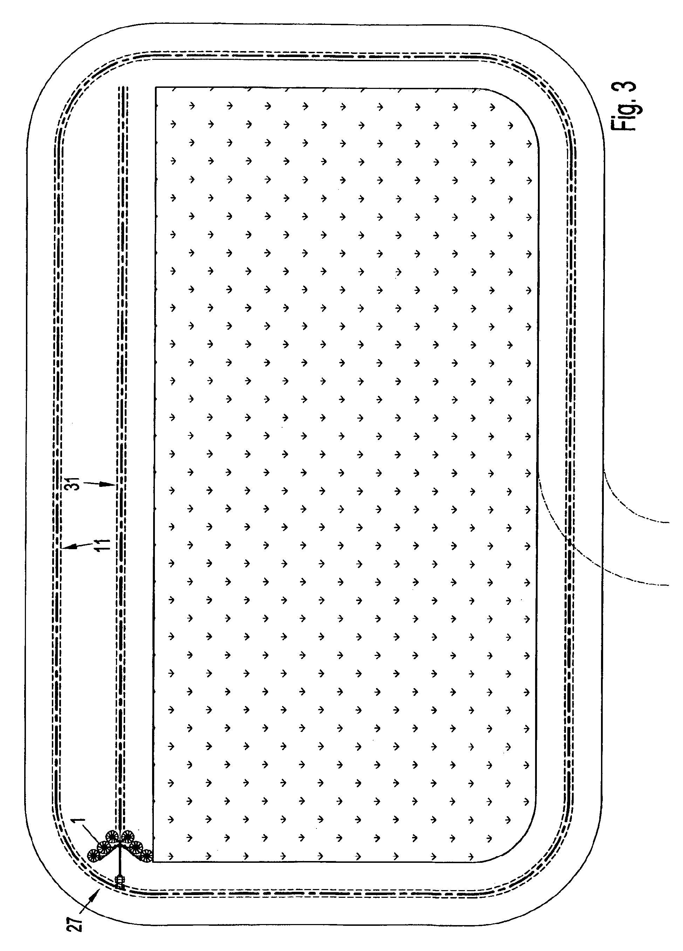

Fig.3 zeigt die Arbeitssituation 27, die der Fahrer am Ende der ersten neuen Spur bzw. des ersten neuen Schwads 31 des Routenplans 30 erreicht hat. Dabei müssen bei der Ausfahrt aus dieser Spur zuerst die vordere Staffelreihe 24, danach die mittlere Staffelreihe 25 und zuletzt die hintere Staffelreihe 26 des Schwaders ebenfalls nach den vorgegebenen Strecken X und Y von der bodennahen Stellung in die bodenferne Stellung angehoben werden, um den bereits abgelegten Schwad der ersten Umrundung 15 ebenfalls an dieser Stelle nicht zu zerstören.

Dabei verwendet das neue automatische Steuerungssystem ebenfalls die mit den GPS-Daten generierten Daten der Ausfahrtsposition und führt diesen Vorgang des Anhebens der Schwadkreisel von einer bodennahen in eine bodenferne Position automatisch aus.

Das Signal, um diese beiden Vorgangsabläufe, die des Einstechens und die des Ausfahrens, zu starten, liefert der zweite GPS-Empfänger 4. Indem dieser mit seiner Antenne als Sensor die Kontur 18 bzw. Konturlinie 18 der noch nicht bearbeiteten Fläche überfährt und diese somit schneidet, wird erfindungsgemäß der Befehl zum schrittweisen Absenken oder Anheben der Rechkreisel generiert.

Die so beschriebenen Vorgänge des Einstechens und Aushebens der Staffelreihen der Schwadkreisel wiederholen sich bei jeder neuen Route innerhalb der noch zu bearbeitenden Restfläche.

Jede der neu durchlaufenden Spuren mit deren Schwadablagen werden vom GPS-System und dessen GPS-Daten erfasst, aufgezeichnet und gespeichert, welches bedeutet, dass sowohl die Kontur der Mittelinie 19 der Fahrspuren, welche zugleich die Mittelinie 19 des abgelegten Schwads ist, und die verbleibende Aussenkontur der noch nicht bearbeiteten Fläche, in dem Arbeitsspeicher des µ-Prozessors und ggf. in den vorhandenen externen Speicher online gespeichert werden.

Fig.4 zeigt analog zur Fig.1 ebenfalls die Umrundungsspur einer zu bearbeitenden Fläche, die stark von einer rechteckigen Kontur eines Feldstücks abweicht. Auch in diesem Fall werden analog der Beschreibung unter Fig. 1 die entsprechenden Daten vom GPS-System erfasst und abgespeichert.

Fig.5 zeigt den gleichen Vorgang analog der Beschreibung unter Fig.2. Auch bei einem nicht rechtwinkligen Feld steuert die Automatik der Steuerung beim Einstechen und Ausfahren des Schwaders 1 und damit die Hubbewegungen der einzelnen Schwadkreisel in Abhängigkeit der vorgewählten Route.

In einer weiteren Ausgestaltung der Erfindung wird jedoch nicht nur das Anheben und Absenken der einzelnen Schwadkreisel beim Einstechen und Ausfahren in die Spur der jeweilige Route automatisch gesteuert, sondern die Steuerung erkennt grundsätzlich, wenn sich ein Schwadkreisel in den Bereich eines bereits abgelegten hineinbegibt. Die Folge ist dann, dass auch unter dieser Bedingung die jeweilig betroffenen Schwadkreisel automatisch von einer bodennahen Arbeitsposition in eine bodenferne Parkposition angehoben werden.

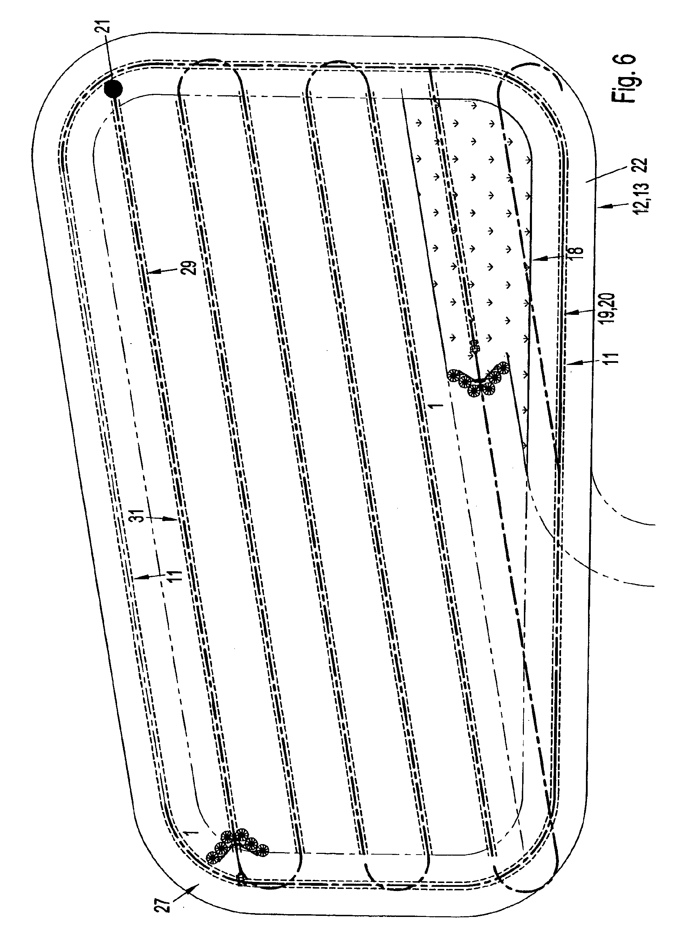

Fig.6 zeigt diese Situation im fortschreitenden Prozess des Schwadens der zu bearbeitenden Fläche. Anhand dieser Darstellung wird deutlich, dass die verbliebene noch zu bearbeitende Fläche die Form eines spitzen Dreiecks angenommen hat. Zu Beginn der eingeschlagenen Schwadspur errechnet das Steuerungssystem, welche Schwadkreisel wann und wo zum Einsatz aus der bodenfernen in die bodennahe Position abgesenkt werden. Mit zunehmender Fahrt längs der eingeschlagenen Fahrspur wird die momentane Breite der zu bearbeitenden Fläche schmaler. Sobald ein aussenliegender Schwadkreisel sich einem bereits abgelegten Schwad nähert, wird dieser automatisch in Abhängigkeit der GPS Daten vom Boden abgehoben und in eine bodenferne Parkposition überführt. Auch am Schwadende wird der Vorgang des Einzelkreiselaushubes ebenso in Abhängigkeit der GPS Daten ausgeführt. Bei besonders spitzem Winkel werden die Schwadkreisel der Situation angepasst, nicht paarweise nach Staffelreihen, sondern in Abhängigkeit der Geometrie der noch zu bearbeitenden Fläche, einzeln entweder von einer bodennahen Arbeitsposition in eine bodenferne Parkposition angehoben oder umgekehrt abgesenkt.

Die weitere Ausgestaltung der Erfindung sieht somit vor, nach dem erstmaligen Unrunden des Feldes mit dem Mehrkreiselschwader mit Hilfe einer Software bzw. eines Programms die optimale Abfolge der Spuren für die noch zu bearbeitende Fläche des Feldes automatisch zu ermitteln. Dazu gehört auch die Ermittlung der Einstich- und Ausfahrorte der jeweiligen Spuren, in denen die Schwade abgelegt werden. Daraus abgeleitet können die Einstichorte entweder manuell vom Fahrer oder. falls das Zugfahrzeug über eine GPS-Steuerung verfügt mit hochgeklappten Schwadkreiseln der Transportstellung oder zumindest in einer bodenfernen Stellung der Schwadkreisel angefahren werden. Ebenso können bei einer GPS-Steuerung die vorgegebenen Routen zur Schwadbildung automatisch abgefahren werden.

Das Ziel der Erfindung, nämlich in jeder möglichen Arbeitsposition mit einem Mehrkreiselschwader den Fahrer in Bezug auf seine Konzentration hinsichtlich der Fahrbewegungen und der auszuführenden Steuerungsvorgänge der Schwadkreisel mental zu entlasten, ist mit einer automatischen Steuerung nach der Erfindung erreicht. Dieses ermöglicht die Kombination aus der GPS-gestützten Routenplanung und einer automatischen Vorgewendesteuerung der Rechkreisel unter dem Gesichtspunkt eines optimierten und störungsfreien Arbeitsablaufs zum Schutz der bereits abgelegten Schwade, welche durch nachfolgende Arbeitsgänge nicht wieder durch die daran gebundenen Rechkreisel von diesen auseinander gerissen werden.

### Bezugszeichenliste

- 1: Mehrkreiselschwader, Schwader
- 2: Schwadkreisel
- 3: erster GPS-Empfänger
- 4: zweiter GPS-Empfänger
- 5: Tangente
- 6: Empfangsantenne
- 7: Empfangsantenne
- 8: führende Achse
- 9: Fahrgestell
- 10: Deichsel
- 11: abgelegter Schwad, Umrundungsschwad
- 12: Feldkontur
- 13: Bearbeitungsfläche, zu bearbeitende Fläche
- 14: µ-Prozessor
- 15: erste Umrundung, erste Runde
- 16: Feldkontur
- 17: Jobrechner BUS-System
- 18: Fläche bzw. Kontur der noch nicht bearbeiteten und verbleibende Fläche
- 19: Mittellinie, Fahrspur, Schwadkontur
- 20: Schwadkontur
- 21: erster geeigneter Einstichort
- 22: erste bearbeitete Fläche
- 23: Transportzwischenlage
- 24: vordere Staffelreihe
- 25: mittlere Staffelreihe
- 26: hintere Staffelreihe
- 27: Arbeitssituation am Ende der ersten neuen Spur des Routenplans
- 28: Traktor
- 29: Spur des Routenplaners
- 30: Routenplan
- 31: Schwad
- 32: ausgefahrene Arbeitsstellung
- F: Fahrtrichtung
- X: Abstandsmass, zurückgelegte Strecke
- Y: Abstandsmass, zurückgelegte Strecke

## Patentansprüche

1. Verfahren zum Betreiben einer Rechkreiselaushubsteuerung für Mehrkreiselschwader (1) mit wenigstens vier umlaufend angetriebenen an Auslegerarmen angelenkten Schwadkreiseln (2), welche in der bodennahen Arbeitsstellung von Tast und Stützrädern am Boden abgestützt am Boden liegendes Halmgut zusammenrechen und dadurch eine Schwad bilden und ablegen, und die durch Anheben der Auslegerarme von einer bodennahen in eine bodenferne Transport- oder Zwischenstellung angehoben werden können, wobei die Rechkreiselaushubsteuerung ein rechnergestütztes GPS-gesteuertes elektronisches System aufweist, **dadurch gekennzeichnet, dass** das System zwei GPS-Empfänger (3,4), mit je einer Empfangsantenne (6,7) aufweist und die Position der ersten GPS Empfangsantenne (6) auf der führenden Achse (8) eines Fahrgestells (9) des Schwaders (1) und die Position der zweiten GPS Empfangsantenne (7) auf der Deichsel (10) des Fahrgestells (9) in Fahrtrichtung F vor einer Tangente (5) der beiden Rechkreisel der vorderen Staffelreihe (24) in der voll ausgefahrenen Arbeitsstellung (32) des Schwaders (1) liegt, und in einem ersten Verfahrensschritt die GPS Koordinaten einer Feldkontur (16) bei einer ersten Umrundungsfahrt aufgezeichnet sowie im Speicher eines µ-Prozessors (14) eines Jobrechners (17) eines BUS-Systems abgespeichert wird und in einem weiteren Verfahrensschritt die Kontur einer noch zu bearbeitenden Fläche (18) errechnet und im Arbeitspeicher abgelegt wird und der zweite GPS-Empfänger (4) in einem weiteren Verfahrensschritt einen Befehl zum Absenken oder Anheben der Rechkreisel generiert.

2. Verfahren nach Anspruch 1, **dadurch gekennzeichnet, dass** durch die Vernetzung der GPS Koordinaten mit einem µ-Prozessor (14) der Rechkreiselaushubsteuerung des Aushubes, jeder Schwadkreisel (2) des Mehrkreiselschwaders (1) GPS-gesteuert individuell von einer bodennahen in eine bodenferne Stellung und umgekehrt überführt werden kann.

3. Verfahren nach Anspruch 1, **dadurch gekennzeichnet, dass** durch die Vernetzung der GPS Koordinaten mit einem µ-Prozessor (14) der Rechkreiselaushubsteuerung des Aushubes die Schwadkreisel (2) bildenden Staffelreihen (24,25,26) des Mehrkreiselschwaders (1) GPS-gesteuert von einer bodennahen in eine bodenferne Stellung und umgekehrt überführt werden können.

4. Verfahren nach Anspruch 2 oder 3, **dadurch gekennzeichnet, dass** der µ-Prozessor (14) Teil eines LBS oder ISO-BUS-Systems ist.

5. Verfahren nach Anspruch 4, **dadurch gekennzeichnet, dass** der µ-Prozessor (14) Teil eines Job-Rechners des Mehrkreiselschwaders (1) ist.

6. Verfahren nach Anspruch 4, **dadurch gekennzeichnet, dass** der µ-Prozessor (14) Teil eines Traktors (28) ist.

7. Verfahren nach Anspruch 1, **dadurch gekennzeichnet, dass** die Rechkreiselaushubsteuerung eine rechnergestützte GPS-gesteuerte Routenplanung beinhaltet.

## Claims

1. A method of operating a rotary rake lift control for multi-rotor swathers (1) comprising at least four swathing rotors (2) which are driven in rotation and which are pivotably mounted to cantilever arms and which in the working position near the ground supported on the ground by sensing and support wheels rake together stalk crops lying on the ground and thereby form and deposit a swathe and which can be lifted from a position near the ground into a transport or intermediate position remote from the ground by lifting the cantilever arms, wherein the rotary rake lift control has a computer-aided GPS-controlled electronic system **characterised in that** the system has two GPS receivers (3, 4) each having a respective receiving antenna (6, 7) and the position of the first GPS receiving antenna (6) is on the steering axle (8) of a chassis (9) of the swather (1) and the position of the second GPS receiving antenna (7) is on the towbar (10) of the chassis (9) in the direction of travel F in front of a tangent (5) to the two raking rotors of the front array row (24) in the fully extended working position (32) of the swather (1) and in a first method step the GPS co-ordinates of a field contour (16) are recorded in a first circumnavigation travel and stored in the memory of a µ-processor (14) of job computer (17) of a BUS system and in a further method step the contour of an area (18) still to be worked is computed and stored in the working memory and in a further method step the second GPS receiver (4) generates a command for lowering or lifting the raking rotors.

2. A method according to claim 1 **characterised in that** each swathing rotor (2) of the multi-rotor swather (1) can be transferred under GPS control individually from a position near the ground into a position remote from the ground and vice-versa by the networking of the GPS co-ordinates with a µ-processor (14) of the rotary rake lift control of the lift movement.

3. A method according to claim 1 **characterised in that** the array rows (24, 25, 26) forming the swathing rotors (2) of the multi-rotor swather (1) can be transferred under GPS control individually from a position near the ground into a position remote from the ground and vice-versa by the networking of the GPS co-ordinates with a µ-processor (14) of the rotary rake lift control of the lift movement.

4. A method according to claim 2 or claim 3 **characterised in that** the µ-processor (14) is part of an LBS or ISO-BUS system.

5. A method according to claim 4 **characterised in that** the µ-processor (14) is part of a job computer of the multi-rotor swather (1).

6. A method according to claim 4 **characterised in that** the µ-processor (14) is part of a tractor (28).

7. A method according to claim 1 **characterised in that** the rotary rake lift control includes a computer-aided GPS-controlled route planning means.

## Revendications

1. Procédé d'actionnement d'une commande de levage des rotors de râtelage pour une andaineuse multirotor (1) comportant au moins quatre rotors d'andainage (2) entraînés en rotation et articulés sur des bras porteurs, qui, dans la position de travail proche du sol, en prenant appui sur le sol au moyen de roues d'appui et de jauge, râtellent un produit en tiges couché sur le sol et forment et déposent ainsi un andain, et qui, par levage des bras porteurs, peuvent être levés d'une position proche du sol jusqu'à une position de transport ou intermédiaire éloignée du sol, la commande de levage des rotors de râtelage présentant un système électronique assisté par ordinateur et commandé par GPS, **caractérisé en ce que** le système présente deux récepteurs GPS (3, 4) dotés chacun d'une antenne de réception (6, 7), et la position de la première antenne de réception GPS (6) est située sur l'essieu directeur (8) d'un châssis (9) de l'andaineuse (1) et la position de la deuxième antenne de réception GPS (7) est située sur le timon (10) du châssis (9) en aval, dans le sens de marche F, d'une tangente (5) aux deux rotors de râtelage de la rangée échelonnée avant (24) dans la position de travail entièrement déployée (32) de l'andaineuse (1), et, dans une première étape de procédé, les coordonnées GPS d'un contour de champ (16) sont enregistrées lors d'un premier parcours périphérique et stockées dans la mémoire d'un microprocesseur (14) d'un ordinateur de tâches (17) d'un système de bus et, dans une étape de procédé suivante, le contour d'une surface restant à travailler (18) est calculé et stocké dans la mémoire de travail et, dans une étape de procédé suivante, le deuxième récepteur GPS (4) génère un ordre d'abaissement ou de levage des rotors de râtelage.

2. Procédé selon la revendication 1, **caractérisé en ce que**, par l'interconnexion des coordonnées GPS avec un microprocesseur (14) de la commande de levage des rotors de râtelage, chaque rotor d'andainage (2) de l'andaineuse multirotor (1) peut être transféré individuellement, de manière commandée par GPS, d'une position proche du sol jusqu'à une position éloignée du sol et inversement.

3. Procédé selon la revendication 1, **caractérisé en ce que**, par l'interconnexion des coordonnées GPS avec un microprocesseur (14) de la commande de levage des rotors de râtelage, les rangées échelonnées (24, 25, 26) formant des rotors d'andainage (2) de l'andaineuse multirotor (1) peuvent être transférées de manière commandée par GPS d'une position proche du sol jusqu'à une position éloignée du sol et inversement.

4. Procédé selon la revendication 2 ou 3, **caractérisé en ce que** le microprocesseur (14) fait partie d'un LBS ou d'un système de bus ISO.

5. Procédé selon la revendication 4, **caractérisé en ce que** le microprocesseur (14) fait partie d'un ordinateur de tâches de l'andaineuse multirotor (1).

6. Procédé selon la revendication 4, **caractérisé en ce que** le microprocesseur (14) fait partie d'un tracteur (28).

7. Procédé selon la revendication 1, **caractérisé en ce que** la commande de levage des rotors de râtelage contient un calcul d'itinéraire assisté par ordinateur et commandé par GPS.
